# EUROPEAN PATENT SPECIFICATION

(11) **EP 3 816 003 B1**
(45) Date of publication and mention of the grant of the patent: **16.08.2023**
(21) Application number: 19875219.8
(22) Date of filing: 28.06.2019
(51) Int. Cl.: B60W 30/06, B60W 50/14, B60R 16/023, B62D 15/02, G08G 1/16

(54) **AUTOMATIC PARKING METHOD AND VEHICLE CONTROL SYSTEM**
AUTOMATISCHES PARKVERFAHREN UND FAHRZEUGSTEUERUNGSSYSTEM
PROCÉDÉ DE STATIONNEMENT AUTOMATIQUE ET SYSTÈME DE COMMANDE DE VÉHICULE

(30) Priority: 24.10.2018 CN 201811244685
(43) Date of publication of application: 05.05.2021
(73) Proprietor: Guangzhou Chengxing Zhidong Motors Technology Co., Ltd., Guangzhou, Guangdong 510700 (CN); Guangzhou Xiaopeng Motors Technology Co., Ltd., Tianhe District Guangzhou Guangdong (CN)
(72) Inventor: LAI, Jianming, Guangdong 510000 (CN); CHEN, Shengjun, Guangdong 510000 (CN); XIAO, Zhiguang, Guangdong 510000 (CN)
(74) Representative: Ran, Handong
(86) International application number: PCT/CN2019/093431
(87) International publication number: WO 2020/082775

(56) References cited:
- DE-A1-102007 002 262
- JP-A- 2012 076 483
- KR-A- 20140 094 116
- US-A1- 2013 166 190
- US-A1- 2014 121 883

## Description

### TECHNICAL FIELD

The disclosure relates to the technical field of vehicle intelligent assisted driving, in particular to an automatic parking method and a vehicle control system.

### BACKGROUND

With the improvement of living standards, people have higher and higher requirements for functions of vehicles. Automatic parking function has become people's first choice for convenient parking. The application of the automatic parking function not only improves driving safety of vehicles, but also improves driving experience of vehicles.

At present, existing automatic parking methods are usually as follows: a vehicle recognizes an available parking spot designated by markings on the ground intelligently, a vehicle central processing unit calculates a trajectory of the vehicle entering the parking spot, the vehicle is driven along the set trajectory into the parking spot and put into parking gear to end an automatic parking.

However, in practice, in some parking scenarios, there may not be any parking spot designated in advance, and users have to park their vehicles in such an area without any designated parking spot. Current automatic parking technology cannot be applied in this situation.

KR 20140094116A shows the features of the preamble of claims 1 and 7 and discloses a parking assist method for a vehicle through drag-and-drop. In which, images of the perimeter of a vehicle are acquired by using multiple cameras, and a composite image is generated therefrom. A vehicle image presenting a vehicle owned by a driver is generated, and a panorama view image generated by synthesizing the vehicle image with the composite image is displayed on a screen. The location of an area where the vehicle image is dropped is detected, when the vehicle image is dragged and dropped within the panorama view image. The detected location of the area where the vehicle image is dropped is set as a target parking area. Parking assistance is performed for the vehicle in the current location to be parked to the target parking area.

DE 102007002262A1 involves determining parameters of detected possible parking vacancies by sensors. The parameters are represented to the driver by a graphic control unit. The target position of the vehicle is adjusted within a certain parking space by selecting from suggestions made by a computing unit, and the adjusted target position is graphically represented.

US 2014/121883A1 discloses a method of providing parking assistance in a vehicle. In which, a controller in a vehicle identifies a plurality of available parking spaces for the vehicle, and a video output device operatively connected to the controller generates an interface with a graphical depiction of the vehicle and the plurality of available parking spaces. A first input gesture is received with a gesture input device to select one parking space from the plurality of available parking spaces, and the vehicle is operated to park the vehicle in the selected parking space using the controller configured with a parking assistance service in the vehicle.

US 2013/166190A1 discloses a parking position adjustment device that assists in correctly changing a parking position within a parking space in which a vehicle has already parked. The parking position adjustment device includes a current position setting unit that sets the position in which a vehicle is already parked as a current position. The parking position adjustment device further includes a parking space specification unit that specifies a parking space, in which the vehicle is parked, that includes the current position. The parking position adjustment device further includes a target parking position setting unit that sets, within the parking space, a target parking position to which the vehicle is to be moved from the current position. The parking position adjustment device further includes a movement path calculation unit that calculates a movement path of the vehicle from the current position to the target parking position.

### SUMMARY

The disclosure discloses an automatic parking method and a vehicle control system, which can self-define a parking spot and realize automatic parking regardless of no designated parking spot. The invention is set out in the appended set of claims.

Compared with the prior art, the present disclosure has benefits as follows:

In an embodiment of the present disclosure, the vehicle control system displays a vehicle icon and a reachable area on a screen, wherein an initial display position of the vehicle icon on the screen corresponds to a current real-time physical position of a vehicle, the reachable area corresponds to a real area around the vehicle, and the real area meets a parking requirement; detects a touch operation on the screen, moves the vehicle icon from the initial display position to a final touch position of the touch operation, and identifies a virtual positioning of the vehicle corresponding to the vehicle icon after moving to the final touch position; determines a virtual parking spot of the vehicle according to the final touch position and the virtual positioning of the vehicle; determines whether the virtual parking spot of the vehicle is completely located within the reachable area; and in response to the virtual parking spot being located within the reachable area completely, controls the vehicle to be parked into a first real parking space in the real area from the current real-time physical position, wherein the first real parking space corresponds to the virtual parking spot, and a real posture of the vehicle is the same as the virtual positioning of the vehicle after parking the vehicle into the first real parking space. The present embodiment of the disclosure can be implemented in a parking area without designated parking spot, self-define a real parking space and achieve automatic parking according to the real parking space, thereby present disclosure improving users' driving experience. In addition, the embodiments of the present disclosure can make full use of an existing space to park a vehicle without affecting others.

### BRIEF DESCRIPTION OF THE DRAWINGS

In order to explain the technical solutions in the embodiments of the disclosure more clearly, the drawings used in the description of the embodiments are briefly introduced below. Obviously, the following drawings just illustrate some embodiments of the disclosure. For those skilled in the art, other drawings can be obtained based on these drawings without creative work.
FIG. 1 is a schematic flow diagram of an automatic parking method according to an embodiment of the invention;
FIG.2 is a schematic flow diagram of another automatic parking method according to an embodiment of the invention;
FIG.3 is an exemplary diagram of self-defining a parking spot in an automatic parking method according to an embodiment of the invention;
FIG.4 is an exemplary diagram of another self-defining a parking spot in an automatic parking method according to an embodiment of the invention;
FIG.5 is a schematic structural diagram of a vehicle control system according to an embodiment of the invention;
FIG.6 is a schematic structural diagram of another vehicle control system according to an embodiment of the invention;
FIG.7 is a schematic structural diagram of a vehicle control device according to an example useful for understanding the invention but outside the scope of the invention as claimed.

The technical solutions in embodiments of the present disclosure will be clearly and completely described below with reference to drawings.

It should be noted that the intent of the terms "comprise" and "define" and any variations in the embodiments of the present disclosure is to cover non-exclusive inclusions. For example, a process, method, system, product, or device that include a series of steps or units is not limited to the listed steps or units, but optionally include unlisted steps or units, or optionally also include other steps or units inherent in these processes, methods, products or device.

The disclosure discloses an automatic parking method and a vehicle control system, which can self-define a parking spot and realize automatic parking regardless of no designated parking spot.

### DETAILED DESCRIPTION OF EMBODIMENTS

### EMBODIMENT 1

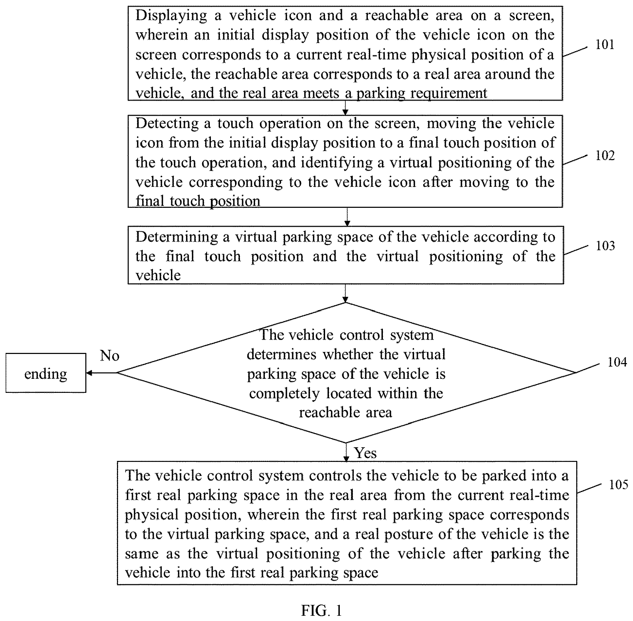

Please refer to FIG. 1. FIG. 1 illustrates a flow diagram of an automatic parking method with the presently described embodiment. The method includes following steps:
101, a vehicle control system displays a vehicle icon and a reachable area on a screen, wherein an initial display position of the vehicle icon on the screen corresponds to a current real-time physical position of a vehicle, the reachable area corresponds to a real area around the vehicle, and the real area meets a parking requirement.

In the present embodiment of the disclosure, the real area around the vehicle is a roadside, an open space, or an area available for parking while without designated parking port. In addition, a preset parking requirement includes enough area for parking a vehicle properly.

As an optional embodiment, the vehicle control system may be internally installed with a GPS (Global Positioning System) module or a radar. Accordingly, the vehicle control system may acquire images around a current location of the vehicle through the GPS module or the radar, identify boundaries of obstacles in the images and define a surrounded area as the reachable area by connecting the boundaries of the obstacles.

As another optional embodiment, the vehicle control system may be equipped with a start button, by pressing which to obtain a start instruction for starting an automatic parking function. When detected that the start button is pressed, the automatic parking function is turned on, and the vehicle icon and the reachable area are controlled to be displayed on the screen. For example, when a user needs to park automatically, he can press the start button, and then the vehicle control system turns on the automatic parking function to perform automatic parking.

Alternatively, the vehicle control system may be internally installed a voice module, which may be used to recognize the user's voice instruction, such as a starting instruction by saying "please turn on automatic parking", which is used as a start instruction to turn on the automatic parking function. When the start instruction is detected, the automatic parking function is turned on, and then the vehicle icon and the reachable area are displayed on the screen. For example, when the user needs to park automatically, he can input the instruction "please turn on automatic parking" by voice, and then the vehicle control system turns on the automatic parking function to perform automatic parking.

Alternatively, the vehicle control system can detect a movement track password on the screen, such as the movement track of writing letter "P", which is taken as a start instruction to turn on the automatic parking function. The vehicle control system detects a first click operation on the screen, and then monitors a movement track formed by an operation on the screen. When a second click operation on the screen is detected, the vehicle control system checks whether the movement track complies with the movement track password. If yes, the vehicle control system turns on the automatic parking function, and then the vehicle control system displays the vehicle icon and the reachable area on the screen. A position corresponding to the first click operation is a start position of the movement track, and a position corresponding to the second click operation is an end position of the movement track. For example, when the user needs to park automatically, he can write a letter "P" on the screen, and then the vehicle control system turns on the automatic parking function to perform automatic parking.

As another optional embodiment, when a vehicle speed drops to a specified speed, the vehicle control system receives an automatic parking instruction triggered due to a low speed, turns on the automatic parking function, and then displays the vehicle icon and reachable area on the screen.

When the user needs to park, the speed of the vehicle will be reduced. The vehicle control system can turn on the automatic parking function when the vehicle speed is reduced to the specified speed, and then perform automatic parking. The vehicle control system of the embodiment is more intelligent and the user's driving experience is improved.

As another optional embodiment, when the vehicle enters a specified area, the vehicle control system turns on the automatic parking function, and then displays the vehicle icon and reachable area on the screen. The specific scene may be a parking space, which is not restricted by the embodiment in the present disclosure.

By implementing the above methods, when the user drives the vehicle into the parking space, the vehicle control system turns on the automatic parking function, and then performs automatic parking. The vehicle control system of the embodiment is more intelligent and the user's driving experience is improved.

102, the vehicle control system detects a touch operation on the screen, moves the vehicle icon from the initial display position to a final touch position of the touch operation, and identifies a virtual positioning of the vehicle corresponding to the vehicle icon after moving to the final touch position.

In the embodiment of the present disclosure, when the vehicle control system detects a touch operation on the screen, the vehicle icon is moved from the initial display position to the final touch position corresponding to the end of the touch operation. After moving to the final touch position, the user performs further operations on the vehicle icon. The vehicle control system recognizes the virtual positioning of the vehicle corresponding to the vehicle icon moved to the final touch position. The virtual positioning of the vehicle generally refers to directions of a head and a tail of the vehicle icon.

103, the vehicle control system determines a virtual parking spot of the vehicle according to the final touch position and the virtual positioning of the vehicle.

In the embodiment of the present disclosure, the vehicle control system determines a virtual parking spot of the vehicle according to the final touch position, and then determines an orientation of the virtual parking spot according to the virtual positioning of the vehicle, so that the virtual parking spot completely accommodates the vehicle icon.

104, the vehicle control system determines whether the virtual parking spot of the vehicle is completely located within the reachable area, if yes, perform step 105; and if no, end this process of automatic parking.

105, the vehicle control system controls the vehicle to be parked into a first real parking space in the real area from the current real-time physical position, the first real parking space corresponds to the virtual parking spot, and a real posture of the vehicle is the same as the virtual positioning of the vehicle after parking the vehicle into the first real parking space.

As an optional embodiment, the vehicle control system may be equipped with a stop button. During the process of the vehicle control system controlling the vehicle to park from the real-time physical position to the first real parking space in the real area, pressing the stop button can be taken as a stop instruction to stop the automatic parking function when the automatic parking has to be turned off under an emergency. When it is detected that the stop button is pressed, the automatic parking function is turned off. For example, when the user discovers an emergency and wants to immediately turn off the automatic parking during the automatic parking process, he can press the stop button and the vehicle control system turns off the automatic parking function and switches to manual parking.

As an optional embodiment, the vehicle control system can be internally installed with a voice module, which can be used to recognize the user's voice instructions, such as a turn off instruction by saying "please turn off automatic parking", which serves as a turn off instruction to turn off the automatic parking function. When the turn off instruction is detected, the automatic parking function is turned off. For example, when the user discovers an emergency and wants to turn off the automatic parking function immediately during the automatic parking process, he can input the instruction "please turn off automatic parking" by voice, and then the vehicle control system turns off automatic parking, and switch to manual parking.

By implementing the above two methods, in the process of automatic parking, once an emergency occurs, the user can immediately turn off the automatic parking function and switch to manual parking. Dangers can be avoided, and the user's personal safety can be protected.

By implementing the method illustrated in FIG. 1, in some parking area without designated parking spot, the vehicle control system can self-define the real parking space according to the touch operation on the screen and the automatic parking is accomplished according to the self-defined parking space and is regardless of no designated parking spot. The user's driving experience is improved. In addition, implementing the method illustrated in FIG. 1 can avoid dangers caused by emergencies and greatly protect personal safety of users.

### EMBODIMENT 2

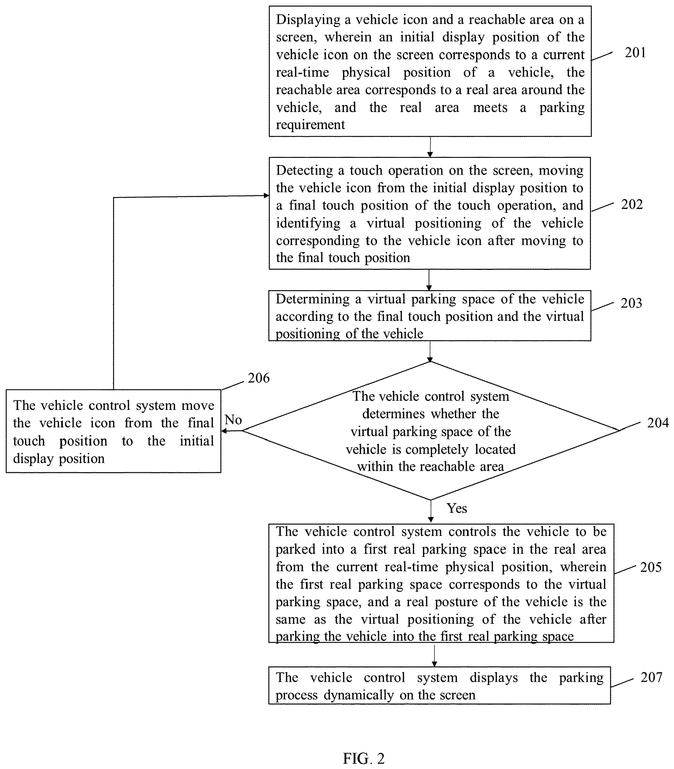

Please refer to FIG. 2. FIG. 2 illustrates a flow diagram of another automatic parking method with the presently described embodiments. As illustrated in FIG. 2, the method includes:
201, the vehicle control system displays a vehicle icon and a reachable area on a screen, wherein an initial display position of the vehicle icon on the screen corresponds to a current real-time physical position of a vehicle, the reachable area corresponds to a real area around the vehicle, and the real area meets a parking requirement.

In the present embodiment of the disclosure, the real area around the vehicle is a roadside, an open space, or an area available for parking while without designated parking port. In addition, a preset parking requirement includes enough area for parking a vehicle properly.

As an optional embodiment, the vehicle control system may be internally installed a GPS (Global Positioning System) module or a radar. Accordingly, the vehicle control system may acquire image of the area around a current location of the vehicle through the GPS module or the radar, identify boundaries of obstacles in the image and define a surrounded area as the reachable area by connecting the boundaries of the obstacles

202, the vehicle control system detects a touch operation on the screen, moves the vehicle icon from the initial display position to a final touch position of the touch operation, and identifies a virtual positioning of the vehicle corresponding to the vehicle icon after moving to the final touch position.

As an optional embodiment, the vehicle control system can detect a drag operation performed on the vehicle icon that is displayed at the initial display position of the screen, and move, along a movement track of the drag operation, the vehicle icon from the initial display position to a final drag position of the drag operation.

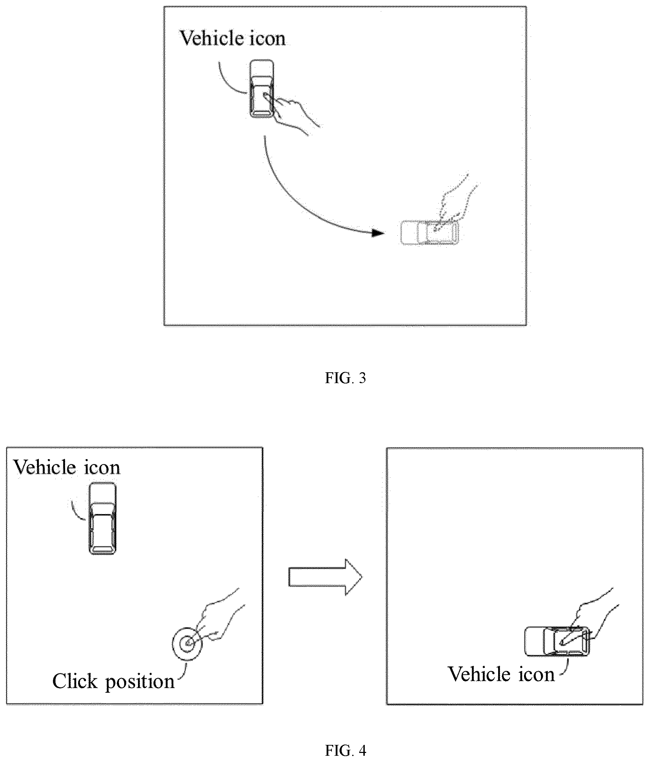

Please also refer to FIG. 3. FIG. 3 is an exemplary diagram of self-defining a parking spot in an automatic parking method according to an embodiment of the invention. As illustrated in FIG. 3, the user selects the vehicle icon displayed at the initial display position, and then drags the vehicle icon to a certain position. When the drag operation ends, the position is used as the final drag position.

Further, the user performs a rotating operation on the vehicle icon in the drag position, changes the direction of the head and tail of the vehicle icon through the rotation operation, so that the vehicle control system recognizes the virtual positioning of the vehicle corresponding to the vehicle icon.

As an optional embodiment, the vehicle control system can detect a click operation performed on the reachable area that is displayed on the screen, and move the vehicle icon from the initial display position to a click position of the click operation;

Please refer to FIG. 4, it is an exemplary diagram of another self-defining a parking spot in an automatic parking method according to an embodiment of the invention. As illustrated in FIG.4, the user selects a position and clicks the position within the reachable area, and this location is taken as the click location. The vehicle control system moves the vehicle icon from the initial display position to a click position according to the click position selected by the user.

Further, the user performs a rotating operation on the vehicle icon in the drag position, changes the direction of the head and tail of the vehicle icon through the rotation operation, so that the vehicle control system recognizes the virtual positioning of the vehicle corresponding to the vehicle icon.

203, the vehicle control system determines the virtual parking spot according to the final touch position and the virtual positioning of the vehicle.

204, the vehicle control system determines whether the virtual parking spot of the vehicle is completely located within the reachable area, if yes, then execute step 205; and if no, then execute step 206.

205, the vehicle control system controls the vehicle to be parked into a first real parking space in the real area from the current real-time physical position, the first real parking space corresponds to the virtual parking spot, and a real posture of the vehicle is the same as the virtual positioning of the vehicle after parking the vehicle into the first real parking space.

It's noted that, after executing step 205, execute step 207.

206, the vehicle control system moves the vehicle icon from the final touch position to the initial display position, this is just an example useful for understanding the invention but outside the scope of the invention as claimed.

It's noted that, after executing step 206, execute step 202.

The virtual parking spot of the vehicle not completely located within the reachable area, shows that an area to be parked into is not sufficient for a safe vehicle parking of the. At this time, the vehicle control system can move the vehicle icon to the initial display position, and the user can perform a touch operation on the vehicle icon again.

After the vehicle control system determines that the virtual parking spot of the vehicle is not completely located within the reachable area in step 204, the vehicle control system corrects the final touch position self-adaptively to obtain a first corrected position; determines a first corrected virtual parking spot according to the first corrected position and the virtual positioning of the vehicle, wherein the first corrected virtual parking spot is completely located within the reachable area. The vehicle control system controls the vehicle to be parked into a second real parking space in the real area from the current real-time physical position, wherein the first corrected virtual parking spot corresponds to the second real parking space and the real posture of the vehicle is the same as the virtual positioning of the vehicle after parking the vehicle to the second real parking space.

Also, after determining that the virtual parking spot is not completely located within the reachable area in step 204, the vehicle control system corrects the final touch position self-adaptively to obtain a second corrected position; and corrects the virtual positioning of the vehicle self-adaptively to obtain a first corrected virtual positioning; determines a second corrected virtual parking spot according to the second corrected position and the first corrected virtual positioning, wherein the second corrected virtual parking spot is completely located within the reachable area. The vehicle control system controls the vehicle to be parked into a third real parking space in the real area from the current real-time physical position, wherein the second corrected virtual parking spot corresponds to the third real parking space, the real posture of the vehicle is the same as the virtual positioning of the vehicle after parking the vehicle to the third real parking space.

Alternatively, after determining that the virtual parking spot of the vehicle is determined not completely located within the reachable area in step 204, the vehicle control system can correct the virtual positioning of the vehicle self-adaptively to obtain a second corrected virtual positioning; determine a third corrected virtual parking spot according to the final touch position and the second corrected virtual positioning, the third corrected virtual parking is completely located within the reachable area. The vehicle control system can control the vehicle to be a fourth real parking space in the real area from the real-time physical position, the third corrected virtual parking spot corresponds to the fourth real parking space, the real posture of the vehicle is the same as the second corrected virtual positioning after parking the vehicle to the fourth real parking space. It is noted that, this case is just example useful for understanding the invention but outside the scope of the invention as claimed.

Implementing the above methods, the virtual parking spot of the vehicle not completely located in the reachable area, shows that an area to be parked into is not sufficient for the vehicle parking and accomplish a safe parking. The vehicle control system corrects the final touch position and the virtual positioning of the vehicle to re-determine a virtual parking spot of the vehicle and then perform automatic parking, therefore ensuring safety of parking

207, the vehicle control system displays a parking process on the screen dynamically.

As an optional embodiment, the vehicle control system can move the vehicle icon from the final touch position back to the initial display position, display a parking spot box corresponding to the virtual parking spot of the vehicle on the screen, where the parking spot box can be rectangular or circular, which is not limited by the embodiment of the present disclosure. In addition, the size of the parking spot box can be changed or fixed, which is not limited in the embodiment of the present disclosure. In the process of controlling the vehicle to park from the real-time physical location to the first real parking space in the real area, the vehicle control system controls the parking spot box corresponding to the virtual parking spot of the vehicle to move to the initial display position, thereby rendering the vehicle icon located in the parking spot box corresponding to the virtual parking space. That's to say, the vehicle icon stays still on the screen, and the parking spot box corresponding to the virtual parking spot is moved and displayed dynamically.

As another optional embodiment, the vehicle control system can move the vehicle icon from the final touch position back to the initial display position, display the parking spot box corresponding to the virtual parking spot of the vehicle on the screen, the parking spot box can be rectangular or circular, which is not limited in the embodiment of the present disclosure. In addition, the size of the parking spot box can be changed or fixed, which is not limited in the embodiment of the present disclosure. In the process of controlling the vehicle to park from the real-time physical location to the real parking space in the first real area, the vehicle icon is controlled to move to the parking spot box corresponding to the vehicle virtual parking spot, thereby rendering the vehicle icon located in the parking spot box corresponding to the virtual parking space. The vehicle icon stays still on the screen, and the parking spot box corresponding to the virtual parking spot is moved and displayed dynamically.

By implementing the above two methods, the vehicle control system can display the parking process of the vehicle on the screen intuitively, which greatly improves the user's driving experience.

Implementing the method illustrated in FIG. 2, in some parking area without designated parking spot, it is possible to self-define the parking space according to the final touch operation on the screen and accomplish automatic parking according to the self-defined parking space without being restricted by the parking space. The user's driving experience is improved. In addition, implementing the method illustrated in FIG. 2 can avoid dangers caused by emergencies and greatly protect personal safety of users. Furthermore, when implementing the method illustrated in FIG. 2, the virtual parking spot of the vehicle not completely within the reachable area, indicates that the area to be parked into is not sufficient for the vehicle and the safety of parking is not guaranteed. At this time, the final touch position and virtual positioning of the vehicle are corrected to re-determine the virtual parking spot of the vehicle to ensure the safe parking of the vehicle and make full use of the existing space to park the vehicle without affecting others. Moreover, implementing the method illustrated in FIG. 2 can display the parking process on the screen dynamically, thereby the parking process can be visualized.

### EMBODIMENT 3

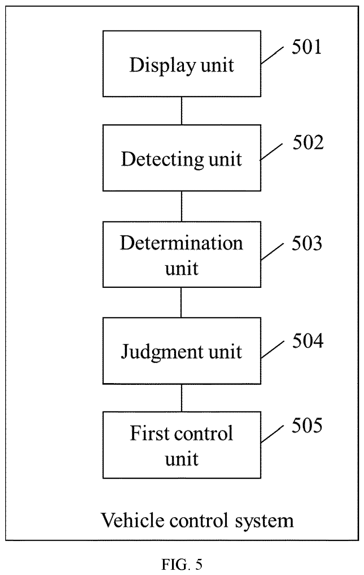

Please refer to FIG. 5. FIG. 5 is a schematic structural diagram of a vehicle control system according to an embodiment of the invention, the vehicle control system includes:
a display unit 501, used to display a vehicle icon and a reachable area on a screen; an initial display position of the vehicle icon on the screen corresponds to a current real-time physical position of the vehicle, and a reachable area corresponds to a real area around the vehicle, the real area meets parking requirements;
a detecting unit 502, used to detect a touch operation on the screen, move the vehicle icon from the initial display position to a final touch position of the touch operation, and identify a virtual positioning of the vehicle corresponding to the vehicle icon after moving to the final touch position;
a determination unit 503, used to determine a virtual parking spot of the vehicle according to the final touch position and the virtual positioning of the vehicle;
a judgment unit 504, used to judge whether the virtual parking spot of the vehicle is completely located within the reachable area.
a first control unit 505, used to control the vehicle to park, from the real-time physical position, to a first real parking space of the real area after the judgment unit judging that the virtual parking spot of the vehicle is completely located within the reachable area; the virtual parking spot of the vehicle corresponds to the first real parking space, and the real posture of the vehicle is the same as the virtual positioning of the vehicle after the vehicle is parked into the first real parking space.

As an optional embodiment, the vehicle control system may be equipped with a start button, by pressing which to obtain a start instruction for starting an automatic parking function. When the first display unit 501 detected that the start button is pressed, automatic parking function is turned on, and then display the vehicle icon and reachable area on the screen.

Alternatively, the display unit 501 may include an internally installed voice module, which may be used to recognize the user's voice instructions, such as a starting instruction "please turn on automatic parking". The start instruction which is used as a start instruction to turn on the automatic parking function. When the start instruction is detected by the display unit 501, the display unit 501 turns on the automatic parking function, and then displays the vehicle icon and reachable area on the screen.

Alternatively, the display unit 501 can detect a movement track password on the screen, such as the movement track of writing letter "P", which is taken as a start instruction to turn on the automatic parking function. The display unit 501 detects a first click operation on the screen, and then monitors a movement trajectory formed by the operation on the screen. When the display unit 501 detects the second click operation on the screen, detects whether the movement track complies with the movement track password. If yes, the automatic parking function is turned on and display the vehicle icon and reachable area on the screen. The start position corresponding to the first click operation is the start position of the movement track, and the second click operation corresponding to the end position of the movement track.

As another optional embodiment, when the vehicle speed drops to a specified speed, the display unit 501 receives an automatic parking instruction triggered due to a low speed, turns on the automatic parking function, and displays vehicle icon and the reachable area on the screen.

Alternatively, when the vehicle enters a specific area, the display unit 501 turns on the automatic parking function, and then displays the vehicle icon and reachable area on the screen. The specific area may be a parking space which is not limited in the embodiment in the present disclosure.

As an optional embodiment, the vehicle control system may be equipped with a stop button. During the process of the vehicle control system controlling the vehicle to park from the real-time physical position to the first real parking space in the real area, pressing the stop button can be taken as a stop instruction to stop the automatic parking function when the automatic parking has to be turned off if under an emergency. When it is detected that the stop button is pressed, the automatic parking function is turned off. For example, when the user discovers an emergency and wants to turn off the automatic parking immediately during the automatic parking process, he can press the stop button and the vehicle control system turns off the automatic parking function and switches to manual parking.

As an optional embodiment, the vehicle control system can internally be installed with a voice module, which can be used to recognize the user's voice instruction, such as the termination instruction by saying "please turn off automatic parking", which is used as a turn off instruction to turn off the automatic parking function. When the turn off instruction is detected, the automatic parking function is turned off. For example, when the user discovers an emergency and wants to turn off the automatic parking function immediately during the automatic parking process, he can input the password "please turn off automatic parking" by voice, and then the vehicle control system turns off automatic parking, and switch to manual parking.

Implementing the vehicle control system illustrated in FIG. 5, in some parking area without designated parking spot, the parking space can be self-defined according to the touch operation on the screen. The automatic parking is accomplished according to the self-defined parking space, thereby enhancing the user's driving experience. In addition, implementing the vehicle control system illustrated in FIG. 5 can avoid dangers caused by emergencies and greatly protect personal safety of users.

### EMBODIMENT 4

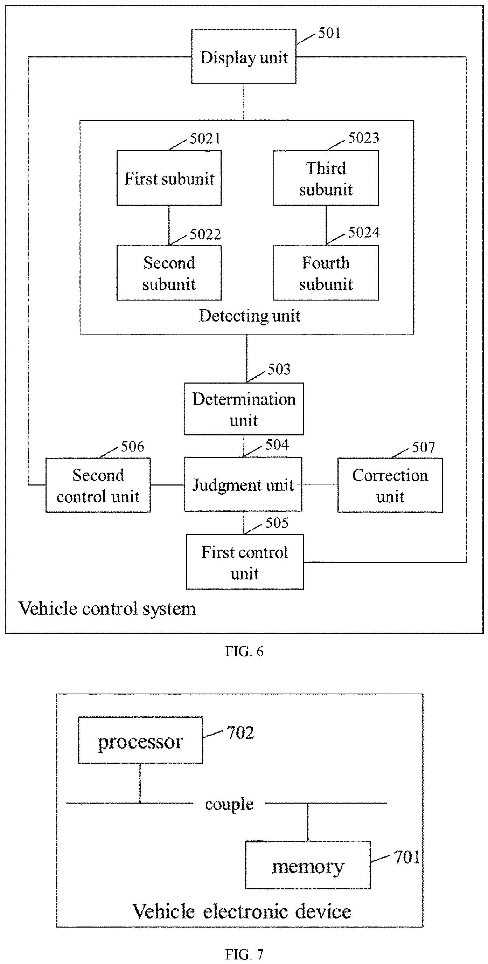

Please refer to FIG. 6. FIG. 6 is a schematic structural diagram of another vehicle control system according to an embodiment of the invention. The vehicle control system shown in FIG. 6 is further optimized from the vehicle control system shown in FIG. 5. Compared with the vehicle control system shown in FIG. 5, the vehicle control system shown in FIG. 6 may further include a detecting unit 502,
the detecting unit 502 includes:
a first subunit 5021, used to detect a drag operation performed on the vehicle icon that is displayed at the initial display position of the screen, and move, along a movement track of the drag operation, the vehicle icon from the initial display position to a final drag position of the drag operation;
a second subunit 5022, used to detect a rotation operation of the vehicle icon moved to the final drag position, and identify the virtual positioning of the vehicle corresponding to the vehicle icon after moving to the final drag position according to the rotation operation;
a third subunit 5023, used to detect a click operation performed on the reachable area that is displayed on the screen, and move the vehicle icon from the initial display position to a click position of the click operation;
a fourth subunit 5024, used to detect the rotation operation on the vehicle icon after moving to the click position, and recognize a virtual positioning of the vehicle corresponding to the vehicle icon after moving to the click position according to the rotation operation;
a determination unit 503, used to determine a virtual parking spot of the vehicle according to the final touch position and the virtual positioning of the vehicle;
alternatively, the determination unit 503, used to determine the virtual parking spot according to the click position and the virtual positioning of the vehicle;
a display unit 501, further used to move the vehicle icon from the final touch position back to the initial display position, and displaying a parking spot box corresponding to the virtual parking spot of the vehicle on the screen;
a second controlling unit 506, used to control the vehicle to be parked into a first real parking space in the real area from the current real-time physical position, moving the parking spot box corresponding to the virtual parking spot of the vehicle to the initial display position to make the vehicle icon enclosed by the parking spot box corresponding to the virtual parking spot of the vehicle;
alternatively, the second controlling unit 506, used to control the vehicle to be parked into a first real parking space in the real area from the current real-time physical position, move the vehicle icon to the parking spot box corresponding to the virtual parking spot of the vehicle to make the vehicle icon enclosed by the parking spot box corresponding to the virtual parking spot.

The second controlling unit 506, further used to move the vehicle icon from the final touch position to the initial display position, when the judgment unit 504 judges that the virtual parking spot of the vehicle is not completely located within the reachable area, this is just an example useful for understanding the invention but outside the scope of the invention as claimed.

Correction unit 507, used to correct the final touch position self-adaptively to obtain a first corrected position when the judgment unit 504 judges that the virtual parking spot of the vehicle is not completely located within the reachable area, determine a first corrected virtual parking spot according to the first corrected position and the virtual positioning of the vehicle, the first corrected virtual parking spot is completely located within the reachable area; control the vehicle to be parked into a second real parking space in the real area from the current real-time physical position, the first corrected virtual parking spot corresponds to the second real parking space and the real posture of the vehicle is the same as the virtual positioning of the vehicle after parking the vehicle to the second real parking space.

Also, the correction unit 507, when the judgment unit 504 judges that the virtual parking spot of the vehicle is not completely located within the reachable area, used to correct the final touch position self-adaptively to obtain a second corrected position; and correcting the virtual positioning of the vehicle self-adaptively to obtain a first corrected virtual positioning; determine a second corrected virtual parking spot according to the second corrected position and the first corrected virtual positioning, the second corrected virtual parking spot is completely located within the reachable area; control the vehicle to be parked into a third real parking space in the real area from the current real-time physical position, the second corrected virtual parking spot corresponds to the third real parking space, the real posture of the vehicle is the same as the virtual positioning of the vehicle after parking the vehicle to the third real parking space.

Alternatively, the correction unit 507, when the judgment unit 504 judges that the virtual parking spot of the vehicle is not completely located within the reachable area, used to correct the virtual positioning of the vehicle self-adaptively to obtain a second corrected virtual positioning; determine a third corrected virtual parking spot according to the final touch position and the second corrected virtual positioning, the third corrected virtual parking is completely located within the reachable area; control the vehicle to be parked into a fourth real parking space in the real area from the real-time physical position, the third corrected virtual parking spot corresponds to the fourth real parking space, the real posture of the vehicle is the same as the second corrected virtual positioning after parking the vehicle to the fourth real parking space. It is noted that, this case is just example useful for understanding the invention but outside the scope of the invention as claimed.

The detecting unit 502 of the vehicle control system may only include the first subunit 5021 and the second subunit 5022; or the detecting unit 502 of the vehicle control system may only include the third subunit 5023 and the fourth subunit 5024.

As an optional embodiment, after the judgment unit 504 judges that the virtual parking spot of the vehicle is not completely located in the reachable area, the second control unit 506 is triggered to move the vehicle icon from the final touch position to the initial display position, this is just example useful for understanding the invention but outside the scope of the invention as claimed.

After the judgment unit 504 judges that the virtual parking spot of the vehicle is not completely within the reachable area, the correction unit 507 is triggered to correct the final touch position and the virtual positioning of the vehicle to re-determine the virtual parking spot of the vehicle, so that the redetermined virtual parking spot for the vehicle is completely located within the reachable area.

As another optional embodiment, the display unit 501 can move the vehicle icon from the final touch position back to the initial display position, display the parking spot box corresponding to the virtual parking spot of the vehicle on the screen. The parking spot box can be rectangular or circular, which is not limited in the embodiment of the present disclosure. In addition, the size of the parking spot box can be variable or fixed, which is not limited in the embodiment of the present disclosure.

As another optional embodiment, during the process in which the first control unit 505 controls the vehicle to park from the real-time physical position to the first real parking space in the real area, the second control unit 506 may control the parking spot box corresponding to the virtual parking spot of the vehicle to move to the initial display position so that the vehicle icon is enclosed by the parking spot box corresponding to the virtual parking spot of the vehicle. The vehicle icon stays still the screen, and the parking spot box corresponding to the virtual parking spot is moved and displayed dynamically.

As another optional embodiment, during the process of the first control unit 505 controlling the vehicle to park from the real-time physical position to the first real parking space in the real area, the second control unit 506 may control the vehicle icon to move to the parking spot box corresponding to the virtual parking spot of the vehicle, so that the vehicle icon is enclose by the parking spot box corresponding to the virtual parking spot of the vehicle. The parking spot box corresponding to the virtual parking spot of the vehicle stays still on the screen, move the vehicle icon and display it dynamically.

Implementing the vehicle control system illustrated in FIG. 6, in some parking area without designated parking spot, the parking space can be self-defined without being restricted by the parking space, and the parking space can be self-defined according to the touch operation on the screen and the automatic parking is completed according to the self-defined parking space, thereby enhancing the user's driving experience. In addition, implementing the vehicle control system illustrated in FIG. 6 can avoid dangers caused by emergencies and greatly protect the personal safety of users. Furthermore, implementing the vehicle control system illustrated in FIG. 6, when the virtual parking spot of the vehicle is not completely within the reachable area, the vehicle cannot be parked completely and realizes safe parking. At this time, the final touch position and virtual positioning of the vehicle are corrected to re-determine the virtual parking spot of the vehicle, which ensure the safe parking of the vehicle, and make full use of the existing space to park the vehicle without affecting others. Moreover, implementing the vehicle control system illustrated in Fig. 6 can dynamically display the parking process on the screen, thereby the parking process can be visualized.

Please refer to FIG. 7. FIG. 7 is a schematic structural diagram of another vehicle control system according to an example useful for understanding the invention but outside the scope of the invention as claimed. As is shown in FIG.7, the vehicle control system may include:
a memory 701, having executable program codes stored therein;
a processor 702, coupled to the memory 701;
the processor702 executes any one of automatic parking methods illustrated in FIG. 1 to FIG.3 , when calling the executable program codes stored in the memory 701.

A computer-readable storage medium that stores a computer program is also disclosed according to an example useful for understanding the invention but outside the scope of the invention as claimed. The computer program causes a computer to execute any of the automatic parking methods shown in FIG. 1 to FIG. 2.

A platform for application publishing is also disclosed according to an example useful for understanding the invention but outside the scope of the invention as claimed. The platform for application publishing is used to publish computer program product, when the computer program product is run on the computer, the computer executes part or all of the steps of the first aspect.

In the various embodiments of the present disclosure, the sequence numbers of the aforementioned processes do not mean the necessary sequence of execution. The execution order of each process should be determined by its function and internal logic and should not limit the implementation process of the embodiments of the present disclosure.

The units described above as separate components may or may not be physically separated, and the components displayed as units may or may not be physical units and may be located in one place or distributed on multiple network units. Some or all of the units can be selected according to actual needs to achieve the purpose of the embodiment.

In addition, the functional units in the embodiments of the present disclosure may be integrated into one processing unit, or each unit may exist alone physically, or two or more units may be integrated into one unit. The above-mentioned integrated unit can be realized in the form of hardware or software functional unit.

If the above integrated unit is implemented in the form of a software functional unit and sold or used as an independent product, it can be stored in a computer-accessible memory. Based on this understanding, the essence of the technical solution of the present disclosure, the part that contributes to the existing technology, all or part of the technical solution can be embodied in the form of a software product, and the computer software product can be stored in a memory. Including several requests to make a computer device (which may be a personal computer, a server or a network device, etc., specifically a processor in a computer device) execute some or all of the steps of the above methods of the any embodiments of the present disclosure.

Those of ordinary skilled in the art can understand that all or part of the steps in the various methods of the above-mentioned embodiments can be completed by a program instructing relevant hardware. The program can be stored in a computer-readable storage medium. The storage medium includes Read-Only Memory (Read-Only Memory, ROM), Random Access Memory (RAM), Programmable Read-only Memory (PROM), Erasable Programmable Read Only Memory (Erasable Programmable Read Only Memory, EPROM), One-time Programmable Read-Only Memory (OTPROM), Electronically-Erasable Programmable Read-Only Memory (EEPROM), CD-ROM (Compact Disc Read-Only Memory, CD-ROM) or other optical disk storage, magnetic disk storage, tape storage, or any other computer-readable medium that can be used to carry or store data.

The above describes in detail an automatic parking method and a vehicle control system disclosed in the embodiments of the invention. Specific examples are used in this application to illustrate the principles and implementations of the present disclosure.

## Claims

1. An automatic parking method, comprising:
displaying (101, 201) a vehicle icon of a vehicle and a reachable area on a screen, wherein an initial display position of the vehicle icon on the screen corresponds to a current real-time physical position of the vehicle, the reachable area corresponds to a real area around the vehicle, and the real area meets a parking requirement;
detecting (102, 202) a touch operation on the screen, moving the vehicle icon from the initial display position to a final touch position of the touch operation, and identifying a virtual positioning of the vehicle corresponding to the vehicle icon after moving to the final touch position; and
determining (103, 203) a virtual parking spot of the vehicle according to the final touch position and the virtual positioning of the vehicle;
wherein the reachable area is available for parking while without a parking spot designated by markings on ground,
the method being **characterized by** further comprising:
determining (104, 204) whether the virtual parking spot of the vehicle is completely located within the reachable area that is available for parking while without the designated parking spot;
in response to the virtual parking spot being completely located within the reachable area that is available for parking while without the designated parking spot, controlling (105, 205) the vehicle to be parked into a first real parking space in the real area from the current real-time physical position, wherein the first real parking space corresponds to the virtual parking spot, and a real posture of the vehicle is the same as the virtual positioning of the vehicle after parking the vehicle into the first real parking space; and
in response to determining that the virtual parking spot of the vehicle is not completely located within the reachable area that is available for parking while without the designated parking spot, correcting the final touch position self-adaptively to obtain a first corrected position, determining a first corrected virtual parking spot according to the first corrected position and the virtual positioning of the vehicle, the first corrected virtual parking spot being completely located within the reachable area that is available for parking while without the designated parking spot, and controlling the vehicle to be parked into a second real parking space in the real area from the current real-time physical position, wherein the second real parking space corresponds to the first corrected virtual parking spot and the real posture of the vehicle is the same as the virtual positioning of the vehicle after parking the vehicle to the second real parking space.

2. The method according to claim 1, wherein the detecting (102, 202) a touch operation on the screen, moving the vehicle icon from the initial display position to a final touch position of the touch operation, and identifying a virtual positioning of the vehicle corresponding to the vehicle icon after moving to the final touch position comprises:
detecting a drag operation performed on the vehicle icon that is displayed at the initial display position of the screen, and moving, along a movement track of the drag operation, the vehicle icon from the initial display position to a final drag position of the drag operation; and
detecting a rotation operation performed on the vehicle icon after moving to the final drag position, and identifying the virtual positioning of the vehicle corresponding to the vehicle icon after moving to the final drag position according to the rotation operation;
wherein the determining (103, 203) a virtual parking spot of the vehicle according to the final touch position and the virtual positioning of the vehicle comprises:
determining the virtual parking spot of the vehicle according to the final drag position and the virtual positioning of the vehicle.

3. The method according to claim 1, wherein the detecting (102, 202) a touch operation on the screen, moving the vehicle icon from the initial display position to a final touch position of the touch operation, and identifying a virtual positioning of the vehicle corresponding to the vehicle icon after moving to the final touch position comprises:
detecting a click operation performed on the reachable area that is displayed on the screen, and moving the vehicle icon from the initial display position to a click position of the click operation; and
detecting a rotation operation on the vehicle icon after the vehicle icon is moved to the click position, and identifying a virtual positioning of the vehicle corresponding to the vehicle icon after moving to the click position according to the rotation operation;
wherein the determining (103, 203) a virtual parking spot of the vehicle according to the final touch position and the virtual positioning of the vehicle comprises:
determining the virtual parking spot according to the click position and the virtual positioning of the vehicle.

4. The method according to claim 1, further comprising:
moving (206) the vehicle icon from the final touch position back to the initial display position, and displaying a parking spot box corresponding to the virtual parking spot of the vehicle on the screen;
while controlling (105, 205) the vehicle to be parked into the first real parking space in the real area from the current real-time physical position, moving the parking spot box corresponding to the virtual parking spot of the vehicle to the initial display position to make the parking spot box corresponding to the virtual parking spot of the vehicle enclose the vehicle icon; or,
while controlling (105, 205) the vehicle to be parked into the first real parking space of the real area from the current real-time physical position, moving the vehicle icon to the parking spot box corresponding to the virtual parking spot of the vehicle to make the vehicle icon enclosed by the parking spot box corresponding to the virtual parking spot of the vehicle.

5. The method according to claim 1, wherein the displaying (101, 201) a vehicle icon and a reachable area on a screen comprises:
in response to detecting a movement track of writing a letter "P" on the screen, displaying (101, 201) the vehicle icon and the reachable area on the screen.

6. The method according to claim 1, wherein in response to determining that the virtual parking spot of the vehicle is not completely located within the reachable area, the method further comprising:
correcting the final touch position self-adaptively to obtain a second corrected position; and correcting the virtual positioning of the vehicle self-adaptively to obtain a first corrected virtual positioning; determining a second corrected virtual parking spot according to the second corrected position and the first corrected virtual positioning, wherein the second corrected virtual parking spot is completely located within the reachable area; and
controlling the vehicle to be parked into a third real parking space in the real area from the current real-time physical position, wherein the second corrected virtual parking spot corresponds to the third real parking space, and the real posture of the vehicle is the same as the virtual positioning of the vehicle after parking the vehicle to the third real parking space.

7. A vehicle control system, comprising:
a display unit (501), configured to display a vehicle icon of a vehicle and a reachable area on a screen; wherein an initial display position of the vehicle icon on the screen corresponds to a current real-time physical position of the vehicle, the reachable area corresponds to a real area around the vehicle, and the real area meets parking requirements;
a detecting unit (502), configured to detect a touch operation on the screen, move the vehicle icon from the initial display position to a final touch position of the touch operation, and identify a virtual positioning of the vehicle corresponding to the vehicle icon after moving to the final touch position; and
a determination unit (503), configured to determine a virtual parking spot of the vehicle according to the final touch position and the virtual positioning of the vehicle;
wherein the reachable area is available for parking while without a parking spot designated by markings on ground,
the system being **characterized by** further comprising:
a judgment unit (504), configured to judge whether the virtual parking spot of the vehicle is completely located within the reachable area that is available for parking while without the designated parking spot;
a first control unit (505), configured to directly control the vehicle to park, from the real-time physical position, to a first real parking space of the real area after the judgment unit (504) judging that the virtual parking spot of the vehicle is completely located within the reachable area that is available for parking while without the designated parking spot; wherein the virtual parking spot of the vehicle corresponds to the first real parking space, and a real posture of the vehicle is the same as the virtual positioning of the vehicle after the vehicle is parked into the first real parking space; and
a correction unit (507), configured to, after the judgment unit (504) judges that the virtual parking spot of the vehicle is not completely located within the reachable area that is available for parking while without the designated parking spot, correct the final touch position self-adaptively to obtain a first corrected position, and determine a first corrected virtual parking spot according to the first corrected position and the virtual positioning of the vehicle; wherein the first corrected virtual parking spot is completely located within the reachable area that is available for parking while without the designated parking spot; and the first control unit (505) is further configured to park the vehicle into a second real parking space in the real area from the real-time physical position, the second real parking space corresponds to the first corrected virtual parking spot, and the real posture of the vehicle is the same as the virtual positioning of the vehicle after the vehicle is parked to the second real parking space.

8. The vehicle control system according to claim 7, wherein the detecting unit (502) comprises:
a first subunit (5021), configured to detect a drag operation on the vehicle icon that is displayed at the initial display position of the screen, and move, along a movement track of the drag operation, the vehicle icon from the initial display position to a final drag position of the drag operation;
a second subunit (5022), configured to detect a rotation operation of the vehicle icon moved to the final drag position, and identify the virtual positioning of the vehicle corresponding to the vehicle icon moved to the final drag position according to the rotation operation; and
a determination unit (503), configured to determine the virtual parking spot of the vehicle according to the final drag position and the virtual positioning of the vehicle.

9. The vehicle control system according to claim 7, wherein the detecting unit (502) comprises:
a third subunit (5023), configured to detect a click operation on the reachable area that is displayed on the screen, and move the vehicle icon from the initial display position to a click position of the click operation;
a fourth subunit (5024), configured to detect a rotation operation of the vehicle icon after moving to the click position, and recognize the virtual positioning of the vehicle corresponding to the vehicle icon after moving to the click position according to the rotation operation; and
a determination unit (503), configured to determine the virtual parking spot for the vehicle according to the click position and the virtual positioning of the vehicle.

10. The vehicle control system according to claim 7,
wherein the display unit (501) is further configured to move the vehicle icon from the final touch position back to the initial display position and display a parking spot box corresponding to the virtual parking spot of the vehicle on the screen;
wherein the vehicle control system further comprises a second control unit (506),
the second control unit (506) is configured to control the parking spot box corresponding to the virtual parking spot of the vehicle to move to the initial display position thereby making the parking spot box corresponding to the virtual parking spot of the vehicle enclose the vehicle icon, while controlling the vehicle to be parked from the real-time physical position to the first real parking space in the real area; or
the second control unit (506) is configured to move the vehicle icon to the parking spot box corresponding to the vehicle virtual parking spot thereby making the vehicle icon enclosed by the parking spot box corresponding to the vehicle virtual parking spot, while controlling the vehicle to be parked from the real-time physical position to the first real parking space in the real area.

11. The vehicle control system according to claim 7, wherein the display unit (501) is configured to display the vehicle icon and the reachable area on the screen in response to detecting a movement track of writing a letter "P" on the screen.

12. The vehicle control system according to claim 7, wherein the correction unit (507) is further configured to, after the judgment unit (504) judges that the virtual parking spot of the vehicle is not completely located within the reachable area, correct the final touch position self-adaptively to obtain a second corrected position, correct the virtual positioning of the vehicle self-adaptively to obtain a first corrected virtual positioning, and determine a second corrected virtual parking spot according to the second corrected position and the first corrected virtual positioning; wherein the second corrected virtual parking spot is completely located within the reachable area; and
the first control unit (505) is further configured to park the vehicle from the real-time physical position into a third real parking space in the real area, the second corrected virtual parking spot corresponds to the third real parking space, and the real posture of the vehicle is the same as the first corrected virtual positioning after the vehicle is parked in the third real parking space.

13. The vehicle control system according to claim 7, further comprising a GPS module or a radar, configured to acquire images of the area around a current location of the vehicle and identify boundaries of obstacles in the images and define a surrounded area as the reachable area by connecting the boundaries of the obstacles.

14. The vehicle control system according to claim 7, further comprising a start button configured to obtain a start instruction to turn on automatic parking.

15. The vehicle control system according to claim 7, further comprising a voice module configured to recognize a voice instruction.

## Patentansprüche

1. Verfahren zum automatischen Einparken, das Folgendes beinhaltet:
Anzeigen (101, 201) eines Fahrzeugsymbols eines Fahrzeugs und eines erreichbaren Bereichs auf einem Bildschirm, wobei eine anfängliche Anzeigeposition des Fahrzeugsymbols auf dem Bildschirm einer aktuellen physischen Echtzeitposition des Fahrzeugs entspricht, der erreichbare Bereich einem realen Bereich um das Fahrzeug herum entspricht und der reale Bereich eine Parkanforderung erfüllt;
Erkennen (102, 202) eines Berührungsvorgangs auf dem Bildschirm, Bewegen des Fahrzeugsymbols von der anfänglichen Anzeigeposition zu einer endgültigen Berührungsposition des Berührungsvorgangs und Identifizieren einer virtuellen Positionierung des Fahrzeugs entsprechend dem Fahrzeugsymbol nach dem Bewegen zu der endgültigen Berührungsposition; und
Bestimmen (103, 203) eines virtuellen Parkplatzes des Fahrzeugs gemäß der endgültigen Berührungsposition und der virtuellen Positionierung des Fahrzeugs;
wobei der erreichbare Bereich zum Parken zur Verfügung steht, während kein durch Markierungen auf dem Boden designierter Parkplatz vorhanden ist,
wobei das Verfahren **dadurch gekennzeichnet ist, dass** es ferner Folgendes beinhaltet:
Feststellen (104, 204), ob der virtuelle Parkplatz des Fahrzeugs vollständig innerhalb des erreichbaren Bereichs liegt, der zum Parken zur Verfügung steht, während der designierte Parkplatz nicht vorhanden ist;
Steuern (105, 205), als Reaktion darauf, dass der virtuelle Parkplatz vollständig innerhalb des erreichbaren Bereichs liegt, der zum Parken zur Verfügung steht, während der designierte Parkplatz nicht vorhanden ist, des Fahrzeugs zum Einparken in eine erste reale Parklücke in dem realen Bereich von der aktuellen physischen Echtzeitposition aus, wobei die erste reale Parklücke dem virtuellen Parkplatz entspricht und eine reale Stellung des Fahrzeugs dieselbe ist wie die virtuelle Positionierung des Fahrzeugs nach dem Einparken des Fahrzeugs in die erste reale Parklücke; und
selbstadaptives Korrigieren, als Reaktion auf die Feststellung, dass der virtuelle Parkplatz des Fahrzeugs nicht vollständig innerhalb des erreichbaren Bereichs liegt, der zum Parken zur Verfügung steht, während der designierte Parkplatz nicht vorhanden ist, der endgültigen Berührungsposition, um eine erste korrigierte Position zu erhalten, Bestimmen eines ersten korrigierten virtuellen Parkplatzes gemäß der ersten korrigierten Position und der virtuellen Positionierung des Fahrzeugs, wobei der erste korrigierte virtuelle Parkplatz vollständig innerhalb des erreichbaren Bereichs liegt, der zum Parken zur Verfügung steht, während der designierte Parkplatz nicht vorhanden ist, und Steuern des Fahrzeugs zum Einparken in eine zweite reale Parklücke in dem realen Bereich von der aktuellen physischen Echtzeitposition aus, wobei die zweite reale Parklücke dem ersten korrigierten virtuellen Parkplatz entspricht und die reale Stellung des Fahrzeugs dieselbe ist wie die virtuelle Positionierung des Fahrzeugs nach dem Einparken des Fahrzeugs in die zweite reale Parklücke.

2. Verfahren nach Anspruch 1, wobei das Erkennen (102, 202) eines Berührungsvorgangs auf dem Bildschirm, das Bewegen des Fahrzeugsymbols von der anfänglichen Anzeigeposition zu einer endgültigen Berührungsposition des Berührungsvorgangs und das Identifizieren einer virtuellen Positionierung des Fahrzeugs entsprechend dem Fahrzeugsymbol nach dem Bewegen zu der endgültigen Berührungsposition Folgendes beinhaltet:
Erkennen eines Ziehvorgangs, der an dem Fahrzeugsymbol durchgeführt wird, das an der anfänglichen Anzeigeposition des Bildschirms angezeigt wird, und Bewegen des Fahrzeugsymbols entlang einer Bewegungsbahn des Ziehvorgangs von der anfänglichen Anzeigeposition zu einer endgültigen Ziehposition des Ziehvorgangs; und
Erkennen eines Drehvorgangs, der an dem Fahrzeugsymbol nach dem Bewegen zu der endgültigen Ziehposition durchgeführt wird, und Identifizieren der virtuellen Positionierung des Fahrzeugs entsprechend dem Fahrzeugsymbol nach dem Bewegen zu der endgültigen Ziehposition gemäß dem Drehvorgang;
wobei das Bestimmen (103, 203) eines virtuellen Parkplatzes des Fahrzeugs gemäß der endgültigen Berührungsposition und der virtuellen Positionierung des Fahrzeugs Folgendes beinhaltet:
Bestimmen des virtuellen Parkplatzes des Fahrzeugs gemäß der endgültigen Ziehposition und der virtuellen Positionierung des Fahrzeugs.

3. Verfahren nach Anspruch 1, wobei das Erkennen (102, 202) eines Berührungsvorgangs auf dem Bildschirm, das Bewegen des Fahrzeugsymbols von der anfänglichen Anzeigeposition zu einer endgültigen Berührungsposition des Berührungsvorgangs und das Identifizieren einer virtuellen Positionierung des Fahrzeugs entsprechend dem Fahrzeugsymbol nach dem Bewegen zu der endgültigen Berührungsposition Folgendes beinhaltet:
Erkennen eines Klickvorgangs, der auf dem auf dem Bildschirm angezeigten erreichbaren Bereich durchgeführt wird, und Bewegen des Fahrzeugsymbols von der anfänglichen Anzeigeposition zu einer Klickposition des Klickvorgangs; und
Erkennen eines Drehvorgangs an dem Fahrzeugsymbol nach dem Bewegen des Fahrzeugsymbols in die Klickposition und Identifizieren einer virtuellen Positionierung des Fahrzeugs entsprechend dem Fahrzeugsymbol nach dem Bewegen in die Klickposition gemäß dem Drehvorgang;
wobei das Bestimmen (103, 203) eines virtuellen Parkplatzes des Fahrzeugs gemäß der endgültigen Berührungsposition und der virtuellen Positionierung des Fahrzeugs Folgendes beinhaltet:
Bestimmen des virtuellen Parkplatzes gemäß der Klickposition und der virtuellen Positionierung des Fahrzeugs.

4. Verfahren nach Anspruch 1, das ferner Folgendes beinhaltet:
Bewegen (206) des Fahrzeugsymbols von der endgültigen Berührungsposition zurück in die anfängliche Anzeigeposition und Anzeigen einer dem virtuellen Parkplatz des Fahrzeugs entsprechenden Parkplatzbox auf dem Bildschirm;
Bewegen, während des Steuerns (105, 205) des Fahrzeugs zum Einparken in die erste reale Parklücke in dem realen Bereich von der aktuellen physischen Echtzeitposition aus, der dem virtuellen Parkplatz des Fahrzeugs entsprechenden Parkplatzbox in die anfängliche Anzeigeposition, so dass die dem virtuellen Parkplatz des Fahrzeugs entsprechende Parkplatzbox das Fahrzeugsymbol umschließt; oder
Bewegen, während des Steuerns (105, 205) des Fahrzeugs zum Einparken in die erste reale Parklücke des realen Bereichs von der aktuellen physischen Echtzeitposition aus, des Fahrzeugsymbols in die dem virtuellen Parkplatz des Fahrzeugs entsprechende Parkplatzbox, so dass das Fahrzeugsymbol von der dem virtuellen Parkplatz des Fahrzeugs entsprechenden Parkplatzbox umschlossen wird.

5. Verfahren nach Anspruch 1, wobei das Anzeigen (101, 201) eines Fahrzeugsymbols und eines erreichbaren Bereichs auf einem Bildschirm Folgendes beinhaltet:
Anzeigen (101, 201), als Reaktion auf das Erkennen einer Bewegungsbahn des Schreibens eines Buchstabens "P" auf dem Bildschirm, des Fahrzeugsymbols und des erreichbaren Bereichs auf dem Bildschirm.

6. Verfahren nach Anspruch 1, wobei als Reaktion auf die Feststellung, dass der virtuelle Parkplatz des Fahrzeugs nicht vollständig innerhalb des erreichbaren Bereichs liegt, das Verfahren ferner Folgendes beinhaltet:
selbstadaptives Korrigieren der endgültigen Berührungsposition, um eine zweite korrigierte Position zu erhalten; und selbstadaptives Korrigieren der virtuellen Positionierung des Fahrzeugs, um eine erste korrigierte virtuelle Positionierung zu erhalten; Bestimmen eines zweiten korrigierten virtuellen Parkplatzes gemäß der zweiten korrigierten Position und der ersten korrigierten virtuellen Positionierung, wobei der zweite korrigierte virtuelle Parkplatz vollständig innerhalb des erreichbaren Bereichs liegt; und
Steuern des Fahrzeugs zum Einparken in eine dritte reale Parklücke in dem realen Bereich von der aktuellen physischen Echtzeitposition aus, wobei der zweite korrigierte virtuelle Parkplatz der dritten realen Parklücke entspricht und die reale Stellung des Fahrzeugs dieselbe ist wie die virtuelle Positionierung des Fahrzeugs nach dem Einparken des Fahrzeugs in die dritte reale Parklücke.

7. Fahrzeugsteuerungssystem, das Folgendes umfasst:
eine Anzeigeeinheit (501), die zum Anzeigen eines Fahrzeugsymbols eines Fahrzeugs und eines erreichbaren Bereichs auf einem Bildschirm konfiguriert ist; wobei eine anfängliche Anzeigeposition des Fahrzeugsymbols auf dem Bildschirm einer aktuellen physischen Echtzeitposition des Fahrzeugs entspricht, der erreichbare Bereich einem realen Bereich um das Fahrzeug herum entspricht und der reale Bereich Parkanforderungen erfüllt;
eine Erkennungseinheit (502), konfiguriert zum Erkennen eines Berührungsvorgangs auf dem Bildschirm, Bewegen des Fahrzeugsymbols von der anfänglichen Anzeigeposition zu einer endgültigen Berührungsposition des Berührungsvorgangs und Identifizieren einer virtuellen Positionierung des Fahrzeugs entsprechend dem Fahrzeugsymbol nach der Bewegung zu der endgültigen Berührungsposition; und
eine Bestimmungseinheit (503), die zum Bestimmen eines virtuellen Parkplatzes des Fahrzeugs gemäß der endgültigen Berührungsposition und der virtuellen Positionierung des Fahrzeugs konfiguriert ist;
wobei der erreichbare Bereich zum Parken zur Verfügung steht, während kein durch Markierungen auf dem Boden designierter Parkplatz vorhanden ist,
wobei das System **dadurch gekennzeichnet ist, dass** es ferner Folgendes umfasst:
eine Beurteilungseinheit (504), konfiguriert zum Beurteilen, ob der virtuelle Parkplatz des Fahrzeugs vollständig innerhalb des erreichbaren Bereichs liegt, der zum Parken zur Verfügung steht, während der designierte Parkplatz nicht vorhanden ist;
eine erste Steuereinheit (505), konfiguriert zum direkten Steuern des Fahrzeugs zum Einparken von der physischen Echtzeitposition aus in eine erste reale Parklücke des realen Bereichs, nachdem die Beurteilungseinheit (504) beurteilt hat, dass der virtuelle Parkplatz des Fahrzeugs vollständig innerhalb des erreichbaren Bereichs liegt, der zum Parken zur Verfügung steht, während der designierte Parkplatz nicht vorhanden ist; wobei der virtuelle Parkplatz des Fahrzeugs der ersten realen Parklücke entspricht und eine reale Stellung des Fahrzeugs dieselbe ist wie die virtuelle Positionierung des Fahrzeugs nach dem Einparken des Fahrzeugs in die erste reale Parklücke; und
eine Korrektureinheit (507), konfiguriert zum selbstadaptiven Korrigieren, nachdem die Beurteilungseinheit (504) beurteilt hat, dass der virtuelle Parkplatz des Fahrzeugs nicht vollständig innerhalb des erreichbaren Bereichs liegt, der zum Parken zur Verfügung steht, während der designierte Parkplatz nicht vorhanden ist, der endgültigen Berührungsposition, um eine erste korrigierte Position zu erhalten, und Bestimmen eines ersten korrigierten virtuellen Parkplatzes gemäß der ersten korrigierten Position und der virtuellen Positionierung des Fahrzeugs; wobei der erste korrigierte virtuelle Parkplatz vollständig innerhalb des erreichbaren Bereichs liegt, der zum Parken zur Verfügung steht, während der designierte Parkplatz nicht vorhanden ist; und die erste Steuereinheit (505) ferner zum Einparken des Fahrzeugs von der physischen Echtzeitposition aus in eine zweite reale Parklücke in dem realen Bereich konfiguriert ist, die zweite reale Parklücke dem ersten korrigierten virtuellen Parkplatz entspricht und die reale Stellung des Fahrzeugs dieselbe ist wie die virtuelle Positionierung des Fahrzeugs nach dem Einparken des Fahrzeugs in die zweite reale Parklücke.

8. Fahrzeugsteuersystem nach Anspruch 7, wobei die Erkennungseinheit (502) Folgendes umfasst:
eine erste Untereinheit (5021), konfiguriert zum Erkennen eines Ziehvorgangs an dem Fahrzeugsymbol, das an der anfänglichen Anzeigeposition des Bildschirms angezeigt wird, und zum Bewegen des Fahrzeugsymbols entlang einer Bewegungsbahn des Ziehvorgangs von der anfänglichen Anzeigeposition zu einer endgültigen Ziehposition des Ziehvorgangs;
eine zweite Untereinheit (5022), konfiguriert zum Erkennen eines Drehvorgangs des in die endgültige Ziehposition bewegten Fahrzeugsymbols und Identifizieren der virtuellen Positionierung des Fahrzeugs entsprechend dem in die endgültige Ziehposition bewegten Fahrzeugsymbol gemäß dem Drehvorgang; und
eine Bestimmungseinheit (503), konfiguriert zum Bestimmen des virtuellen Parkplatzes des Fahrzeugs gemäß der endgültigen Ziehposition und der virtuellen Positionierung des Fahrzeugs.

9. Fahrzeugsteuersystem nach Anspruch 7, wobei die Erkennungseinheit (502) Folgendes umfasst:
eine dritte Untereinheit (5023), konfiguriert zum Erkennen eines Klickvorgangs auf dem auf dem Bildschirm angezeigten erreichbaren Bereich und Bewegen des Fahrzeugsymbols von der anfänglichen Anzeigeposition zu einer Klickposition des Klickvorgangs;
eine vierte Untereinheit (5024), konfiguriert zum Erkennen eines Drehvorgangs des Fahrzeugsymbols nach dem Bewegen zu der Klickposition und Erkennen der virtuellen Positionierung des Fahrzeugs entsprechend dem Fahrzeugsymbol nach dem Bewegen zu der Klickposition gemäß dem Drehvorgang; und
eine Bestimmungseinheit (503), konfiguriert zum Bestimmen des virtuellen Parkplatzes für das Fahrzeug gemäß der Klickposition und der virtuellen Positionierung des Fahrzeugs.

10. Fahrzeugsteuerungssystem nach Anspruch 7,
wobei die Anzeigeeinheit (501) ferner zum Bewegen des Fahrzeugsymbols von der endgültigen Berührungsposition zurück in die anfängliche Anzeigeposition und zum Anzeigen einer dem virtuellen Parkplatz des Fahrzeugs entsprechenden Parkplatzbox auf dem Bildschirm konfiguriert ist;
wobei das Fahrzeugsteuerungssystem ferner eine zweite Steuereinheit (506) umfasst,
die zweite Steuereinheit (506) zum Steuern der Parkplatzbox entsprechend dem virtuellen Parkplatz des Fahrzeugs zum Bewegen in die anfängliche Anzeigeposition konfiguriert ist, so dass die dem virtuellen Parkplatz des Fahrzeugs entsprechende Parkplatzbox das Fahrzeugsymbol umschließt, während sie das Fahrzeug zum Einparken von der physischen Echtzeitposition in die erste reale Parklücke in dem realen Bereich steuert; oder
die zweite Steuereinheit (506) zum Bewegen des Fahrzeugsymbols zu der dem virtuellen Parkplatz des Fahrzeugs entsprechenden Parkplatzbox konfiguriert ist, so dass das Fahrzeugsymbol von der dem virtuellen Parkplatz des Fahrzeugs entsprechenden Parkplatzbox umschlossen wird, während das Fahrzeug zum Einparken von der physischen Echtzeitposition in die erste reale Parklücke in dem realen Bereich gesteuert wird.

11. Fahrzeugsteuerungssystem nach Anspruch 7, wobei die Anzeigeeinheit (501) zum Anzeigen des Fahrzeugsymbols und des erreichbaren Bereichs auf dem Bildschirm als Reaktion auf die Erkennung einer Bewegungsbahn des Schreibens eines Buchstabens "P" auf dem Bildschirm konfiguriert ist.

12. Fahrzeugsteuerungssystem nach Anspruch 7, wobei die Korrektureinheit (507) ferner konfiguriert ist zum selbstadaptiven Korrigieren, nachdem die Beurteilungseinheit (504) beurteilt hat, dass der virtuelle Parkplatz des Fahrzeugs nicht vollständig innerhalb des erreichbaren Bereichs liegt, der endgültigen Berührungsposition, um eine zweite korrigierte Position zu erhalten, zum selbstadaptiven Korrigieren der virtuellen Positionierung des Fahrzeugs, um eine erste korrigierte virtuelle Positionierung zu erhalten, und zum Bestimmen eines zweiten korrigierten virtuellen Parkplatzes gemäß der zweiten korrigierten Position und der ersten korrigierten virtuellen Positionierung; wobei der zweite korrigierte virtuelle Parkplatz vollständig innerhalb des erreichbaren Bereichs liegt; und
die erste Steuereinheit (505) ferner zum Einparken des Fahrzeugs von der physischen Echtzeitposition in eine dritte reale Parklücke in dem realen Bereich konfiguriert ist, die zweite korrigierte virtuelle Parklücke der dritten realen Parklücke entspricht und die reale Stellung des Fahrzeugs die gleiche ist wie die erste korrigierte virtuelle Positionierung nach dem Einparken des Fahrzeugs in die dritte reale Parklücke.

13. Fahrzeugsteuerungssystem nach Anspruch 7, das ferner ein GPS-Modul oder ein Radar umfasst, das zum Erfassen von Bildern des Bereichs um einen aktuellen Standort des Fahrzeugs und zum Identifizieren von Begrenzungen von Hindernissen in den Bildern und zum Definieren eines umgebenen Bereichs als den erreichbaren Bereich durch Verbinden der Begrenzungen der Hindernisse konfiguriert ist.

14. Fahrzeugsteuerungssystem nach Anspruch 7, das ferner eine Starttaste umfasst, die zum Erhalten eines Startbefehls zum Einschalten des automatischen Einparkens konfiguriert ist.

15. Fahrzeugsteuerungssystem nach Anspruch 7, das ferner ein Sprachmodul umfasst, das zum Erkennen eines Sprachbefehls konfiguriert ist.

## Revendications

1. Procédé de stationnement automatique, comprenant :
un affichage (101, 201) d'une icône de véhicule d'un véhicule et d'une zone accessible sur un écran, dans lequel une position d'affichage initiale de l'icône de véhicule sur l'écran correspond à une position physique en temps réel actuelle du véhicule, la zone accessible correspond à une zone réelle autour du véhicule, et la zone réelle répond à une exigence de stationnement ;
une détection (102, 202) d'une opération tactile sur l'écran, un déplacement de l'icône de véhicule de la position d'affichage initiale à une position tactile finale de l'opération tactile, et une identification d'un positionnement virtuel du véhicule correspondant à l'icône de véhicule après déplacement jusqu'à la position tactile finale ; et
une détermination (103, 203) d'un emplacement de stationnement virtuel du véhicule selon la position tactile finale et le positionnement virtuel du véhicule ;
dans lequel la zone accessible est disponible pour un stationnement bien que sans emplacement de stationnement désigné par des marquages au sol,
le procédé étant **caractérisé par** le fait de comprendre en outre :
une détermination (104, 204) du fait que l'emplacement de stationnement virtuel du véhicule est complètement situé ou non au sein de la zone accessible qui est disponible pour un stationnement bien que sans l'emplacement de stationnement désigné ;
en réponse au fait que l'emplacement de stationnement virtuel est complètement situé au sein de la zone accessible qui est disponible pour un stationnement bien que sans l'emplacement de stationnement désigné, une commande (105, 205) du véhicule pour qu'il soit stationné dans un premier espace de stationnement réel dans la zone réelle depuis la position physique en temps réel actuelle, dans lequel le premier espace de stationnement réel correspond à l'emplacement de stationnement virtuel, et une posture réelle du véhicule est la même que le positionnement virtuel du véhicule après stationnement du véhicule dans le premier espace de stationnement réel ;
et
en réponse à une détermination du fait que l'emplacement de stationnement virtuel du véhicule n'est pas complètement situé au sein de la zone accessible qui est disponible pour un stationnement bien que sans l'emplacement de stationnement désigné, une correction de la position tactile finale de manière auto-adaptative pour obtenir une première position corrigée, une détermination d'un premier emplacement de stationnement virtuel corrigé selon la première position corrigée et le positionnement virtuel du véhicule, le premier emplacement de stationnement virtuel corrigé étant complètement situé au sein de la zone accessible qui est disponible pour un stationnement bien que sans l'emplacement de stationnement désigné, et une commande du véhicule pour qu'il soit stationné dans un deuxième espace de stationnement réel dans la zone réelle depuis de la position physique en temps réel actuelle, dans lequel le deuxième espace de stationnement réel correspond au premier emplacement de stationnement virtuel corrigé et la posture réelle du véhicule est la même que le positionnement virtuel du véhicule après stationnement du véhicule sur le deuxième espace de stationnement réel.

2. Procédé selon la revendication 1, dans lequel la détection (102, 202) d'une opération tactile sur l'écran, un déplacement l'icône de véhicule de la position d'affichage initiale à une position tactile finale de l'opération tactile, et une identification d'un positionnement virtuel du véhicule correspondant à l'icône de véhicule après déplacement jusqu'à la position tactile finale comprend :
une détection d'une opération de glissement réalisée sur l'icône de véhicule qui est affichée au niveau de la position d'affichage initiale de l'écran, et un déplacement, le long d'une trajectoire de mouvement de l'opération de glissement, de l'icône de véhicule de la position d'affichage initiale à une position de glissement finale de l'opération de glissement ; et
une détection d'une opération de rotation réalisée sur l'icône de véhicule après déplacement jusqu'à la position de glissement finale, et une identification du positionnement virtuel du véhicule correspondant à l'icône de véhicule après déplacement jusqu'à la position de glissement finale selon l'opération de rotation ;
dans lequel la détermination (103, 203) d'un emplacement de stationnement virtuel du véhicule selon la position tactile finale et le positionnement virtuel du véhicule comprend :
une détermination de l'emplacement de stationnement virtuel du véhicule selon la position de glissement finale et le positionnement virtuel du véhicule.

3. Procédé selon la revendication 1, dans lequel la détection (102, 202) d'une opération tactile sur l'écran, un déplacement de l'icône de véhicule de la position d'affichage initiale à une position tactile finale de l'opération tactile, et une identification d'un positionnement virtuel du véhicule correspondant à l'icône de véhicule après déplacement jusqu'à la position tactile finale comprend :
une détection d'une opération de clic réalisée sur la zone accessible qui est affichée sur l'écran, et un déplacement de l'icône de véhicule de la position d'affichage initiale à une position de clic de l'opération de clic ; et
une détection d'une opération de rotation sur l'icône de véhicule après un déplacement de l'icône de véhicule jusqu'à la position de clic, et une identification d'un positionnement virtuel du véhicule correspondant à l'icône de véhicule après déplacement jusqu'à la position de clic selon l'opération de rotation ;
dans lequel la détermination (103, 203) d'un emplacement de stationnement virtuel du véhicule selon la position tactile finale et le positionnement virtuel du véhicule comprend :
une détermination de l'emplacement de stationnement virtuel selon la position de clic et le positionnement virtuel du véhicule.

4. Procédé selon la revendication 1, comprenant en outre :
un déplacement (206) de l'icône de véhicule de la position tactile finale en retour jusqu'à la position d'affichage initiale, et un affichage d'une boîte d'emplacement de stationnement correspondant à l'emplacement de stationnement virtuel du véhicule sur l'écran ;
tout en commandant (105, 205) le véhicule pour qu'il soit stationné dans le premier espace de stationnement réel dans la zone réelle depuis la position physique en temps réel actuelle, un déplacement de la boîte d'emplacement de stationnement correspondant à l'emplacement de stationnement virtuel du véhicule jusqu'à la position d'affichage initiale pour amener la boîte d'emplacement de stationnement correspondant à l'emplacement de stationnement virtuel du véhicule à entourer l'icône de véhicule ; ou,
tout en commandant (105, 205) le véhicule pour qu'il soit stationné dans le premier espace de stationnement réel de la zone réelle depuis la position physique en temps réel actuelle, un déplacement de l'icône de véhicule jusqu'à la boîte d'emplacement de stationnement correspondant à l'emplacement de stationnement virtuel du véhicule pour amener l'icône de véhicule à être entourée par la boîte d'emplacement de stationnement correspondant à l'emplacement de stationnement virtuel du véhicule.

5. Procédé selon la revendication 1, dans lequel l'affichage (101, 201) d'une icône de véhicule et d'une zone accessible sur un écran comprend :
en réponse à une détection d'une trajectoire de mouvement d'une écriture d'une lettre « P » sur l'écran, un affichage (101, 201) de l'icône de véhicule et de la zone accessible sur l'écran.

6. Procédé selon la revendication 1, dans lequel en réponse à une détermination du fait que l'emplacement de stationnement virtuel du véhicule n'est pas complètement situé au sein de la zone accessible, le procédé comprenant en outre :
une correction de la position tactile finale de manière auto-adaptative pour obtenir une seconde position corrigée ; et une correction du positionnement virtuel du véhicule de manière auto-adaptative pour obtenir un premier positionnement virtuel corrigé ; une détermination d'un second emplacement de stationnement virtuel corrigé selon la seconde position corrigée et le premier positionnement virtuel corrigé, dans lequel le second emplacement de stationnement virtuel corrigé est complètement situé au sein de la zone accessible ; et
une commande du véhicule pour qu'il soit stationné dans un troisième espace de stationnement réel dans la zone réelle depuis la position physique en temps réel actuelle, dans lequel le second emplacement de stationnement virtuel corrigé correspond au troisième espace de stationnement réel, et la posture réelle du véhicule est la même que le positionnement virtuel du véhicule après stationnement du véhicule sur le troisième espace de stationnement réel.

7. Système de commande de véhicule, comprenant :
une unité d'affichage (501), configurée pour afficher une icône de véhicule d'un véhicule et une zone accessible sur un écran ; dans lequel une position d'affichage initiale de l'icône de véhicule sur l'écran correspond à une position physique en temps réel actuelle du véhicule, la zone accessible correspond à une zone réelle autour du véhicule, et la zone réelle répond à des exigences de stationnement ;
une unité de détection (502), configurée pour détecter une opération tactile sur l'écran, déplacer l'icône de véhicule de la position d'affichage initiale à une position tactile finale de l'opération tactile, et identifier un positionnement virtuel du véhicule correspondant à l'icône de véhicule après déplacement jusqu'à la position tactile finale ; et
une unité de détermination (503), configurée pour déterminer un emplacement de stationnement virtuel du véhicule selon la position tactile finale et le positionnement virtuel du véhicule ;
dans lequel la zone accessible est disponible pour un stationnement bien que sans emplacement de stationnement désigné par des marquages au sol,
le système étant **caractérisé par** le fait de comprendre en outre :
une unité de décision (504), configurée pour décider du fait que l'emplacement de stationnement virtuel du véhicule est complètement situé ou non au sein de la zone accessible qui est disponible pour un stationnement bien que sans l'emplacement de stationnement désigné ;
une première unité de commande (505), configurée pour commander directement le véhicule à stationner, de la position physique en temps réel, à un premier espace de stationnement réel de la zone réelle après que l'unité de décision (504) ait décidé que l'emplacement de stationnement virtuel du véhicule est complètement situé au sein de la zone accessible qui est disponible pour un stationnement bien que sans l'emplacement de stationnement désigné ; dans lequel l'emplacement de stationnement virtuel du véhicule correspond au premier espace de stationnement réel, et une posture réelle du véhicule est la même que le positionnement virtuel du véhicule après que le véhicule soit stationné dans le premier espace de stationnement réel ; et
une unité de correction (507), configurée pour, après que l'unité de décision (504) décide que l'emplacement de stationnement virtuel du véhicule n'est pas complètement situé au sein de la zone accessible qui est disponible pour un stationnement bien que sans l'emplacement de stationnement désigné, corriger la position tactile finale de manière auto-adaptative pour obtenir une première position corrigée, et déterminer un premier emplacement de stationnement virtuel corrigé selon la première position corrigée et le positionnement virtuel du véhicule ; dans lequel le premier emplacement de stationnement virtuel corrigé est complètement situé au sein de la zone accessible qui est disponible pour un stationnement bien que sans l'emplacement de stationnement désigné ; et la première unité de commande (505) est en outre configurée pour stationner le véhicule dans un deuxième espace de stationnement réel dans la zone réelle depuis la position physique en temps réel, le deuxième espace de stationnement réel correspond au premier emplacement de stationnement virtuel corrigé, et la posture réelle du véhicule est la même que le positionnement virtuel du véhicule après stationnement du véhicule sur le deuxième espace de stationnement réel.

8. Système de commande de véhicule selon la revendication 7, dans lequel l'unité de détection (502) comprend :
une première sous-unité (5021), configurée pour détecter une opération de glissement sur l'icône de véhicule qui est affichée au niveau de la position d'affichage initiale de l'écran, et déplacer, le long d'une trajectoire de mouvement de l'opération de glissement, l'icône de véhicule de la position d'affichage initiale à une position de glissement finale de l'opération de glissement ;
une deuxième sous-unité (5022), configurée pour détecter une opération de rotation de l'icône de véhicule déplacée jusqu'à la position de glissement finale, et identifier le positionnement virtuel du véhicule correspondant à l'icône de véhicule déplacée jusqu'à la position de glissement finale selon l'opération de rotation ; et
une unité de détermination (503), configurée pour déterminer l'emplacement de stationnement virtuel du véhicule selon la position de glissement finale et le positionnement virtuel du véhicule.

9. Système de commande de véhicule selon la revendication 7, dans lequel l'unité de détection (502) comprend :
une troisième sous-unité (5023), configurée pour détecter une opération de clic sur la zone accessible qui est affichée sur l'écran, et déplacer l'icône de véhicule de la position d'affichage initiale à une position de clic de l'opération de clic ;
une quatrième sous-unité (5024), configurée pour détecter une opération de rotation de l'icône de véhicule après déplacement jusqu'à la position de clic, et reconnaître le positionnement virtuel du véhicule correspondant à l'icône de véhicule après déplacement jusqu'à la position de clic selon l'opération de rotation ; et
une unité de détermination (503), configurée pour déterminer l'emplacement de stationnement virtuel du véhicule selon la position de clic et le positionnement virtuel du véhicule.

10. Système de commande de véhicule selon la revendication 7,
dans lequel l'unité d'affichage (501) est en outre configurée pour déplacer l'icône de véhicule de la position tactile finale en retour à la position d'affichage initiale et afficher une boîte d'emplacement de stationnement correspondant à l'emplacement de stationnement virtuel du véhicule sur l'écran ;
dans lequel le système de commande de véhicule comprend en outre une seconde unité de commande (506),
la seconde unité de commande (506) est configurée pour commander la boîte d'emplacement de stationnement correspondant à l'emplacement de stationnement virtuel du véhicule à se déplacer jusqu'à la position d'affichage initiale amenant ainsi la boîte d'emplacement de stationnement correspondant à l'emplacement de stationnement virtuel du véhicule à entourer l'icône de véhicule, tout en commandant le véhicule pour qu'il soit stationné de la position physique en temps réel sur le premier espace de stationnement réel dans la zone réelle ; ou
la seconde unité de commande (506) est configurée pour déplacer l'icône de véhicule jusqu'à la boîte d'emplacement de stationnement correspondant à l'emplacement de stationnement virtuel de véhicule amenant ainsi l'icône de véhicule à être entourée par la boîte d'emplacement de stationnement correspondant à l'emplacement de stationnement virtuel de véhicule, tout en commandant le véhicule pour qu'il soit stationné de la position physique en temps réel sur le premier espace de stationnement réel dans la zone réelle.

11. Système de commande de véhicule selon la revendication 7, dans lequel l'unité d'affichage (501) est configurée pour afficher l'icône de véhicule et la zone accessible sur l'écran en réponse à une détection d'une trajectoire de mouvement d'écriture d'une lettre « P » sur l'écran.

12. Système de commande de véhicule selon la revendication 7, dans lequel l'unité de correction (507) est en outre configurée pour, après que l'unité de décision (504) décide que l'emplacement de stationnement virtuel du véhicule n'est pas complètement situé au sein de la zone accessible, corriger la position tactile finale de manière auto-adaptative pour obtenir une seconde position corrigée, corriger le positionnement virtuel du véhicule de manière auto-adaptative pour obtenir un premier positionnement virtuel corrigé, et déterminer un second emplacement de stationnement virtuel corrigé selon la seconde position corrigée et le premier positionnement virtuel corrigé ; dans lequel le second emplacement de stationnement virtuel corrigé est complètement situé au sein de la zone accessible ; et
la première unité de commande (505) est en outre configurée pour stationner le véhicule de la position physique en temps réel sur un troisième espace de stationnement réel dans la zone réelle, le second emplacement de stationnement virtuel corrigé correspond au troisième espace de stationnement réel, et la posture réelle du véhicule est la même que le premier positionnement virtuel corrigé après que le véhicule soit stationné dans le troisième espace de stationnement réel.

13. Système de commande de véhicule selon la revendication 7, comprenant en outre un module GPS ou un radar, configuré pour acquérir des images de la zone autour d'un emplacement actuel du véhicule et identifier des délimitations d'obstacles dans les images et définir une zone cernée à titre de zone accessible en connectant les délimitations des obstacles.

14. Système de commande de véhicule selon la revendication 7, comprenant en outre un bouton de démarrage configuré pour obtenir une instruction de démarrage pour activer un stationnement automatique.

15. Système de commande de véhicule selon la revendication 7, comprenant en outre un module vocal configuré pour reconnaître une instruction vocale.
